# EUROPEAN PATENT SPECIFICATION

(11) **EP 3 828 974 B1**
(45) Date of publication and mention of the grant of the patent: **28.01.2026**
(21) Application number: 19212412.1
(22) Date of filing: 29.11.2019
(51) Int. Cl.: H01M 8/0286, H01M 8/241, H01M 8/2432, H01M 8/0271, H01M 8/0273

(54) **UNIT CELL ASSEMBLY FOR FUEL CELL STACKS AND METHOD FOR MAKING**
EINHEITENZELLENANORDNUNG FÜR BRENNSTOFFZELLENSTAPEL UND VERFAHREN ZUR HERSTELLUNG
ENSEMBLE DE CELLULES D'UNITÉ POUR PILES DE CELLULES À COMBUSTIBLE ET SON PROCÉDÉ DE FABRICATION

(43) Date of publication of application: 02.06.2021
(73) Proprietor: AVL List GmbH, 8020 Graz (AT); AVL Fuel Cell Canada Inc., Burnaby, British Columbia V5A4N8 (CA)
(72) Inventor: Gallagher, Emerson, Vancouver, British Columbia V6L2T5 (CA)
(74) Representative: Gamper, Bettina

(56) References cited:
- EP-A2- 2 946 431
- WO-A1-2018/217586
- US-A1- 2009 000 732

## Description

This invention relates to unit cell assemblies for solid polymer electrolyte fuel cell stacks and to methods for making them. In particular, it relates to designs and methods involving liquid injection mold seals.

Fuel cells electrochemically convert fuel and oxidant reactants, such as hydrogen and oxygen or air, to generate electric power. Solid polymer electrolyte fuel cells generally employ a proton conducting, solid polymer membrane electrolyte between cathode and anode electrodes. The electrodes typically comprise appropriate catalysts to promote the electrochemical reactions taking place at each electrode. A structure comprising a solid polymer membrane electrolyte sandwiched between these two electrodes is known as a membrane electrode assembly (MEA). In one common embodiment, the MEA comprises a catalyst coated membrane (CCM) and gas diffusion layers (GDLs) applied on each side of the CCM. In the CCM, appropriate catalyst compositions have been applied and bonded to either side of the membrane electrolyte. The GDLs are provided to improve both the distribution of the fluid reactants to the electrodes and the removal of fluid by-products from the electrodes.

In a typical solid polymer electrolyte fuel cell, flow field plates comprising numerous fluid distribution channels for the reactants are provided on either side of a MEA to distribute fuel and oxidant to the respective electrodes and to remove reaction by-products from the fuel cell. Water is the primary by-product in a cell operating on hydrogen and air reactants. Because the output voltage of a single cell is of order of 1 V, a plurality of cells is usually stacked together in series for commercial applications in order to provide a higher output voltage. Fuel cell stacks can be further connected in arrays of interconnected stacks in series and/or parallel for use in automotive applications and the like.

Along with water, heat is a significant by-product from the electrochemical reactions taking place within the fuel cell. Means for cooling a fuel cell stack is thus generally required. Stacks designed to achieve high power density (e.g. automotive stacks) typically circulate liquid coolant throughout the stack in order to remove heat quickly and efficiently. To accomplish this, coolant flow fields comprising numerous coolant channels are also typically incorporated in the flow field plates of the cells in the stacks. The coolant flow fields are typically formed on the electrochemically inactive surfaces of both the anode side and cathode side flow field plates and, by appropriate design, a sealed coolant flow field is created when both anode and cathode side plates are mated together into a bipolar flow field plate assembly.

To efficiently manufacture such fuel cell stacks, numerous identical cell assemblies known as unit cell assemblies are usually prepared with an appropriate design such that they can simply be stacked, one on top of the other, to complete most of the assembly of the stack. Special end cell assemblies may be required at the ends of the stack to properly complete the assembly.

A typical unit cell assembly comprises a MEA (e. g. a CCM with GDLs applied on each side thereof) bonded to a bipolar flow field plate assembly. Various designs and assembly methods have been proposed in the art in order to achieve the numerous seals and bonds required in the fuel cell stack. In one approach, the unit cell assembly comprises a plastic film frame which is used in the MEA in to provide electrical isolation, mechanical alignment, and sealing functions. An elastomeric seal to provide a satisfactory seal near the edge of the unit cell assembly is applied to the bipolar flow field plate assembly using methods such as liquid injection molding (LIM), screen printing, dispensing, and so on. This approach however can result in a large waste stream of the framing film (since film in the active area of the fuel cell must be removed and discarded). Further, the framing film may cause alignment problems because it is typically not very rigid and may increase the need for space for tolerance take-up when numerous assemblies are involved.

In another related approach disclosed in DE 102015201129 A1, the unit cell assembly may again comprise a plastic film frame, but an elastomeric seal to provide a satisfactory seal between unit cell assemblies is applied to the frame instead of the bipolar flow field plate. The aforementioned drawbacks are similar with this approach, although this design may be slightly more compact due to simplifications of the tolerance stack-up paths.

Rather than using plastic film frames, other alternative approaches may employ flush cut MEAs in which the edges of the GDLs have been impregnated and sealed with elastomer, e.g. via a liquid injection mold process. For instance, US 6423439 B1 discloses flush cut MEA designs with liquid injection molded edge seals. This design produces no framing film waste stream (since none is employed), but it does require use of a very low process viscosity seal material because of the requirement for it to adequately penetrate and seal the GDL edges. This generally limits the elastomer material choice to silicone, whose chemistry unfortunately leads to lifetime issues with the membrane electrolyte. Further, the flexible material around the perimeter of the sealed MEA can then cause significant issues with aligning the edge sealed MEA to the flow field plate assembly in a fuel cell stack assembly.

In another related approach, the aforementioned LIM edge sealed, flush cut MEA may concurrently be LIM sealed to its associated flow field plate assembly. In this variation, a flow field plate assembly is loaded into a LIM tool, a flush cut MEA is placed on top thereof, and the LIM process joins the two together into a complete unit cell assembly. This design can improve tolerance paths (requiring less space for tolerance take-up) and simplify stack assembly and part alignment. However, it still requires very low process viscosity sealant to penetrate the GDL edges, again usually limiting the elastomer choice to silicone which in turn adversely affects fuel cell lifetime. The low process viscosity also requires LIM tool shutoffs to contact the plate in order to prevent flashing, which drives significant tolerance limitations and can cause plate breakage due to applied loads Further still, if any problems are experienced during LIM processing, the entire unit cell assembly is likely lost and thus enters the waste stream.

While a great deal of consideration has gone into developing unit cell assembly designs and methods for making them, there remains a continuing desire for additional simplification and efficiency in the manufacture of these parts. This is the object of the present invention.

The present invention includes novel unit cell assemblies for a solid polymer electrolyte fuel cell stack and improved methods for making them. Further, it includes fuel cell stacks which comprise a series stack of a plurality of these unit cell assemblies. In the methods, a single one of the cell's gas diffusion layers is initially bonded to an associated flow field plate assembly using an elastomeric seal, wherein the elastomeric seal is made of elastomers that are selected from the group consisting of polyisobutylene, ethylene propylene diene monomer, silicone, polyolefin elastomer, and fluorocarbon rubber, such as a liquid injection mold seal. Sealing of the unit cell assembly is accomplished without penetrating the edges of both gas diffusion layers with elastomer. The method provides for reliably functioning unit cell assemblies while advantageously allowing for use of higher viscosity elastomers in their manufacture and for a reduction in waste produced in the event of LIM process problems.

A unit cell assembly for a solid polymer electrolyte fuel cell stack generally comprises a catalyst coated membrane assembly (CCM) comprising an anode catalyst layer, a cathode catalyst layer, and a solid polymer membrane electrolyte in which the anode and cathode catalyst layers are bonded to opposite sides of the solid polymer membrane electrolyte. The unit cell assembly also comprises an anode gas diffusion layer bonded to the catalyst coated membrane assembly on the anode catalyst layer side opposite the solid polymer membrane electrolyte, a cathode gas diffusion layer bonded to the catalyst coated membrane assembly on the cathode catalyst layer side opposite the solid polymer membrane electrolyte, and a flow field plate assembly comprising fuel and oxidant flow fields on opposite sides of the flow field plate assembly. The flow field plate assembly is bonded to one of the anode and cathode gas diffusion layers on a respective one of its fuel and oxidant flow field sides. In the present invention, the unit cell assembly is characterized in that the bond between the flow field plate assembly and the relevant one of the anode and cathode gas diffusion layers comprises an elastomeric seal at the edge of the relevant one of the anode and cathode gas diffusion layers, and further that the bond between the relevant one of the anode and cathode gas diffusion layers and the catalyst coated membrane assembly comprises an adhesive layer bridging the elastomeric seal and the edge of the relevant one of the anode and cathode gas diffusion layers.

The invention is suitable for use in embodiments in which the anode and cathode gas diffusion layers are porous carbon sheets and/or in which the flow field plate assembly is carbonaceous. Further, it is suitable for use in embodiments comprising a bipolar flow field plate assembly (i.e. in which the flow field plate assembly comprises a fuel flow field plate comprising the fuel flow field and a coolant flow field on opposite sides and an oxidant flow field plate comprising the oxidant flow field and a coolant flow field on opposite sides, and in which the fuel and oxidant flow field plates are bonded together on their respective coolant flow field sides).

Although either gas diffusion layer may be the one initially bonded to its associated flow field plate, in a typical embodiment, the flow field plate assembly is bonded to the anode gas diffusion layer on its fuel flow field side. (This is because the anode gas diffusion layer is typically thicker, denser, and more robust than the cathode gas diffusion layer.) Thus, the bond between the flow field plate assembly and the anode gas diffusion layer comprises an elastomeric seal at the edge of the anode diffusion layer, and the bond between the anode gas diffusion layer and the catalyst coated membrane assembly comprises an adhesive layer bridging the elastomeric seal and the edge of the anode gas diffusion layer.

In a typical embodiment, the elastomeric seal is a liquid injection mold (LIM) seal. The elastomeric seal can now comprise an elastomer having a viscosity greater than 100,000 mPa·s. The elastomeric seal is now made of elastomers that are selected from the group consisting of polyisobutylene, ethylene propylene diene monomer, silicone, polyolefin elastomer, and fluorocarbon rubber.

In a typical embodiment, the adhesive layer is essentially flush with the edge of catalyst coated membrane assembly. (In such a case, it cannot serve as a plastic frame.) The adhesive layer employed may comprise an adhesive selected from the group consisting of epoxies, urethanes, polyisobutylene, and polyolefins.

As mentioned, advantageously it is not required for the elastomeric seal to penetrate the edges of either of the gas diffusion layers nor any edges of the catalyst coated membrane assembly. However, in certain embodiments, some penetration may still have occurred at the edge of the relevant one of the anode and cathode gas diffusion layers, depending on the elastomer and assembly methods employed. Regardless, in those embodiments, the elastomeric seal does not substantially penetrate the edge of the other of the anode and cathode gas diffusion layers nor the edge of the catalyst coated membrane assembly.

Unit cell assemblies of the invention may be manufactured using a method comprising the steps of: preparing the catalyst coated membrane assembly, obtaining the anode and cathode gas diffusion layers, obtaining components for the flow field plate assembly, applying an elastomeric seal, e.g. via liquid injection molding, between the edge of the one of the anode and cathode gas diffusion layers and the respective one of the fuel and oxidant flow field sides of the flow field plate assembly so as to bond the one of the anode and cathode gas diffusion layers to the flow field plate assembly, bonding the other of the anode and cathode gas diffusion layers to the catalyst coated membrane assembly, applying the adhesive layer between the one of the anode and cathode gas diffusion layers and the catalyst coated membrane assembly such that it bridges the elastomeric seal and the edge of the one of the anode and cathode gas diffusion layers and bonding the catalyst coated membrane assembly to the elastomeric seal, wherein the elastomeric seal is made of elastomers that are selected from the group consisting of polyisobutylene, ethylene propylene diene monomer, silicone, polyolefin elastomer, and fluorocarbon rubber and to the edge of the one of the anode and cathode gas diffusion layers using the adhesive layer.

For embodiments involving bipolar flow field plate assemblies (i.e. those whose flow field plate assembly comprises a fuel flow field plate comprising the fuel flow field and a coolant flow field on opposite sides and an oxidant flow field plate comprising the oxidant flow field and a coolant flow field on opposite sides), the method can comprise applying the elastomeric seal after the bipolar plate assembly has been prepared.

Alternatively however, the method can comprise applying the elastomeric seal to the appropriate component flow field plate before assembling the bipolar plate assembly. That is, the method can comprise applying an elastomeric seal between the edge of the one of the anode and cathode gas diffusion layers and the respective one of the fuel and oxidant flow field sides of the respective one of the fuel and oxidant flow field plates, and after the elastomeric seal application step, bonding the fuel and oxidant flow field plates together on their respective coolant flow field sides.

In those embodiments in which the flow field plate assembly is bonded to the anode gas diffusion layer on its fuel flow field side, the method specifically comprises applying an elastomeric seal between the edge of the anode gas diffusion layer and the fuel flow field side of the flow field plate assembly so as to bond the anode gas diffusion layer to the flow field plate assembly, bonding the cathode gas diffusion layer to the catalyst coated membrane assembly, applying the adhesive layer between the anode gas diffusion layer and the catalyst coated membrane assembly such that it bridges the elastomeric seal and the edge of the anode gas diffusion layer, and bonding the catalyst coated membrane assembly to the elastomeric seal and to the edge of the anode gas diffusion layer using the adhesive layer.

These and other aspects of the invention are evident upon reference to the attached Figures and following detailed description.
Figure 1 is a schematic illustration of an edge section of a prior art unit cell assembly comprising a flush cut MEA in which the edges of the GDLs and CCM have been penetrated with a LIM seal. The LIM seal additionally bonds the MEA to a flow field plate assembly.
Figures 2a and 2b show schematic illustrations of distinctive subassemblies prepared during the making of a unit cell assembly of the invention. Figure 2c is a schematic illustration of an edge section of a completed unit cell assembly of the invention.

In this specification, words such as "a" and "comprises" are to be construed in an openended sense and are to be considered as meaning at least one but not limited to just one.

Herein, a "unit cell assembly" refers to an individual assembly which includes each component required to make up a single fuel cell in an associated fuel cell stack. A unit cell assembly is designed such that a plurality of them can simply be stacked to complete most of the assembly of the stack (the fuel cells at the ends of the stack being possible exceptions). Specifically, herein, a unit cell assembly comprises a MEA (i.e. a CCM with GDLs applied on each side thereof) and a bipolar flow field plate assembly.

The phrase "essentially flush" is used in the context of the location of an adhesive layer in the unit cell assembly. It is not intended to exclude embodiments in which the adhesive layer modestly or unintentionally projects beyond the edge of a catalyst coated membrane assembly. It is intended to be construed though as being sufficiently flush so as to be impractically sufficient to serve as a frame for sealing purposes.

Herein, the term "does not substantially penetrate" is used in the context of the extent to which an elastomeric seal penetrates the edge of GDLs and/or the CCM in a unit cell assembly. It is not intended to exclude embodiments in which a modest amount of elastomeric seal material has penetrated one or more of these edges (e.g. inadvertently during manufacture). It is intended to exclude embodiments in which the penetration is sufficient and intended to provide acceptable seals at these edges.

Unique unit cell assemblies for a solid polymer electrolyte fuel cell stack and improved methods for making them are disclosed in which the methods initially comprise bonding a single gas diffusion layer to a flow field plate assembly using an elastomeric seal (e.g. a liquid injection mold seal). Sealing of the unit cell assembly does not rely on penetrating any of the gas diffusion layers with elastomer. The method produces reliably functioning unit cell assemblies while advantageously allowing for use of higher viscosity elastomers and reducing waste.

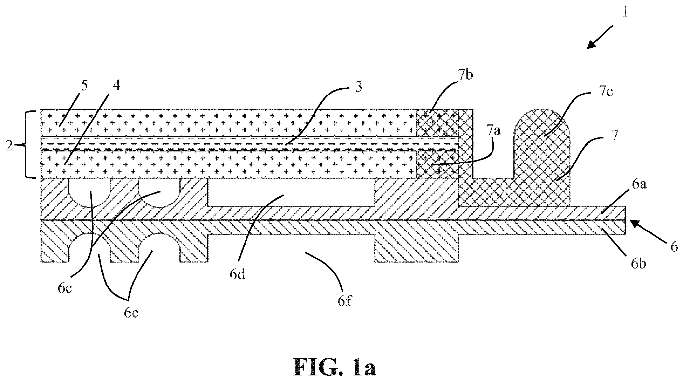

For comparison purposes, Figure 1 shows a schematic illustration of an edge section of a prior art unit cell assembly 1 comprising a flush cut MEA in which the edges of the GDLs and CCM therein have been penetrated with a liquid injection mold (LIM) seal. The LIM seal additionally bonds the MEA to a flow field plate assembly. Specifically, flush cut MEA 2 in unit cell assembly 1 comprises CCM 3. (The anode catalyst layer, cathode catalyst layer, and solid polymer membrane electrolyte in CCM 3 are not called out in Figure 1. However, the anode and cathode catalyst layers are bonded to opposite sides of the solid polymer membrane electrolyte.) Anode gas diffusion layer 4 is bonded to CCM 3 on the anode catalyst layer side opposite the solid polymer membrane electrolyte. Cathode gas diffusion layer 5 is bonded to CCM 3 on the cathode catalyst layer side opposite the solid polymer membrane electrolyte. Bipolar flow field plate assembly 6 comprises fuel flow field plate 6a and oxidant flow field plate 6b on opposite sides. Figure 1 also shows fuel channels 6c for the fuel flow field and fuel transition region 6d which connects the fuel flow field to a supply port (not shown) along with oxidant channels 6e for the oxidant flow field and oxidant transition region 6f which connects the oxidant flow field to a supply port (not shown). (Flow field plate assembly 6 typically comprises an internal coolant flow field but this is not shown nor called out in Figure 1.) As shown, flow field plate assembly 6 is bonded to anode gas diffusion layer 4 on the fuel flow field side. In prior art unit cell assembly 1, applied LIM seal 7 serves multiple sealing and bonding functions. The porous edges of anode gas diffusion layer 4 and cathode gas diffusion layer 5 have been deliberately impregnated with LIM seal portions 7a and 7b respectively so as to completely seal their edges. Further, the porous edges of the anode catalyst layer and cathode catalyst layer in CCM 3 have also been deliberately impregnated with LIM seal portions so as to completely seal their edges. (However, the sealed edges of these catalyst layers are neither shown nor called out in Figure 1.) Further still, LIM seal 7 bonds CCM 3, anode and cathode gas diffusion layers, 4,5, and flow field plate assembly 6 together. Yet further, shaped portion 7c of LIM seal 7 is formed in the shape of a sealing gasket which serves to seal the flow field plate assembly of an adjacent unit cell assembly to that of unit cell assembly 1 in a series stack of unit cell assemblies. The multiple sealing functions provided by LIM seal 7 serve to seal the anode and cathode components (e.g. electrodes, gas diffusion layers) from each other as well as to seal the individual cells in a fuel cell stack from each other and from the external environment.

The embodiment shown in Figure 1 illustrates a presently preferred commercial design. However, low process viscosity sealant must be employed when forming LIM seal 7 in order to penetrate the anode and cathode GDL edges. As mentioned above, this undesirably limits the elastomer choices which may be considered and also requires LIM tool shutoffs to contact the plate in order to prevent flashing (which in turn drives significant tolerance limitations and can cause plate breakage due to applied loads). Additionally, the entire unit cell assembly is likely wasted if any problems are experienced during LIM processing.

In unit cell assemblies of the invention, most of the components involved can be identical or similar to those used in the prior art unit cell assembly of Figure 1. In addition, the techniques used to assemble the components into unit cell assemblies of the invention can also be similar to those used in preparing the prior art unit cell assembly of Figure 1. In the present invention though, an additional adhesive layer is used to effect a bond an appropriate gas diffusion layer and the CCM. And advantageously, low viscosity sealant may be employed in the LIM seal.

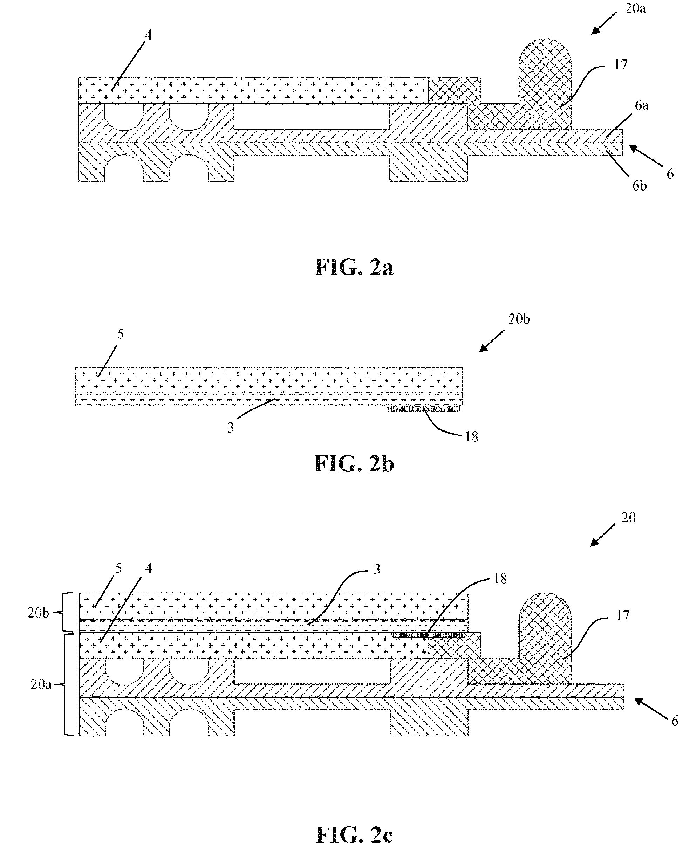

Figures 2a and 2b show schematic illustrations of distinctive subassemblies 20a, 20b prepared during the making of an exemplary unit cell assembly 20 of the invention. Figure 2c is a schematic illustration of an edge section of completed unit cell assembly 20 of the invention. In all of these figures, the same identifying numbers have been used for those components common to those in Figure 1.

Subassembly 20a in Figure 2a is prepared by applying elastomeric LIM seal 17 between the edge of anode gas diffusion layer 4 and the fuel flow field side of flow field plate assembly 6 so as to bond these two components together. Subassembly 20b in Figure 2b is prepared by bonding cathode gas diffusion layer 5 to CCM 3. Adhesive layer 18 is applied to CCM 3 and located such that upon final assembly it lies between anode gas diffusion layer 4 and CCM 3 and bridging elastomeric LIM seal 17 and the edge of anode gas diffusion layer 4. The two subassemblies 20a, 20b are then mated together to produce inventive unit cell assembly 20 of Figure 2c in which CCM 3 is bonded to both elastomeric LIM seal 17 and the edge of anode gas diffusion layer 4 via adhesive layer 18. In the completed unit cell assembly 20, adhesive layer 18 performs the required anode-to-cathode gas sealing function that is otherwise performed by LIM seal portions 7a and 7b which impregnate the GDL edges in prior art unit cell assembly 1. Note that features may be provided in flow field plates 6a and/or 6b to maintain some level of compression on adhesive layer 18 after assembly to ensure adhesive layer 18 is never loaded in tension. Also note that if there are catalyzed membrane areas in CCM 3 (e.g. cathode catalyst areas at the edge of CCM 3 and over transition regions 6d and/or 6f) which need to be deactivated to prevent damage indirectly resulting from the incorporation of adhesive layer 18 opposite thereto, known deactivation methods can be used.

In an alternative embodiment of the invention, a subassembly in which cathode gas diffusion layer 5 is bonded to the oxidant side of flow field side of plate assembly 6 may be prepared instead of subassembly 20a. And a subassembly in which anode gas diffusion layer 4 is bonded to CCM 3 may be prepared instead of subassembly 20b. Then these two alternative subassemblies can be mated together to produce a unit cell assembly 20 analogous to that shown in Figure 2c.

In a further alternative embodiment, adhesive layer 18 may be initially applied to anode gas diffusion layer 4 and elastomeric LIM seal 17 in the making of subassembly 20a instead of to CCM 3 in the making of subassembly 20b. It is also possible to seal a single GDL to a single flow field plate of the bipolar flow field plate assembly 6 first (e.g. seal anode GDL 4 to fuel flow field plate 6a first) and then glue the bipolar flow field plate assembly together (i.e. glue oxidant flow field plate 6b to fuel flow field plate 6a) in a subsequent step. This approach would allow the LIM sealing tool employed to more fully support the flow field plate during the LIM process since there would be no internal cavities (e.g. coolant flow field but not shown in the figures) at this stage. This could reduce the risk of damage to the flow field plate.

The present invention offers numerous advantages over the prior art. Because the porous edges of the CCM and GDLs do not need to be penetrated with elastomer, higher process viscosity elastomer materials can now be used, such as PIB (polyisobutylene) or certain EPDM (ethylene propylene diene monomer) blends, thereby eliminating failures caused by using silicone in the fuel cell assemblies. Further, use of higher viscosity elastomer materials allow for easier flash control on the bipolar plate assembly. Still further, any scrap produced during LIM processing only involves a single GDL as opposed to the complete higher value MEA.

Use of the invention eliminates any unsupported CCM (since it is always completely supported by a GDL, e.g. cathode GDL 5 in Figure 2b) and thereby reduces the risk of catalyst not being electrically connected which in turn, when exposed to air and hydrogen, would drive membrane damaging reactions.

This invention otherwise maintains many of the advantages of the LIM sealed flush cut MEA design of Figure 1. For instance, the bonded unit cell assembly 20 has the same easy stack assembly properties as that of prior art unit cell assembly 1 (as the parts are all relatively rigid and the tolerance path between the various cell components is also shorter without framing parts).

And advantageously, instead of using a LIM process, it may also be possible to apply elastomeric sealant with a screen printing or dispensing process here, again because the sealant does not need to penetrate the GDL. If so however, some complementary tooling may additionally be desired to ensure that the sealant sits at a similar level to the edge of the adjacent GDL

While particular elements, embodiments and applications of the present invention have been shown and described, it will be understood, of course, that the invention is not limited thereto since modifications may be made by those skilled in the art without departing from the scope of the present disclosure, particularly in light of the foregoing teachings. Such modifications are to be considered within the purview and scope of the claims appended hereto.

## Claims

1. A unit cell assembly (20) for a solid polymer electrolyte fuel cell stack comprising:
- a catalyst coated membrane (3) assembly comprising an anode catalyst layer, a cathode catalyst layer, and a solid polymer membrane electrolyte wherein the anode and cathode catalyst layers are bonded to opposite sides of the solid polymer membrane electrolyte;
- an anode gas diffusion layer (4) bonded to the catalyst coated membrane (3) assembly on the anode catalyst layer side opposite the solid polymer membrane electrolyte;
- a cathode gas diffusion layer (5) bonded to the catalyst coated membrane (3) assembly on the cathode catalyst layer side opposite the solid polymer membrane electrolyte; and
- a flow field plate assembly (6) comprising fuel and oxidant flow fields on opposite sides of the flow field plate assembly (6), wherein the flow field plate assembly (6) is bonded one of the anode and cathode gas diffusion layers (4, 5) on a respective one of its fuel and oxidant flow field sides;
**characterized in that**:
- the bond between the flow field plate assembly (6) and the one of the anode and cathode gas diffusion layers (4, 5) comprises an elastomeric seal (17) at the edge of the one of the anode cathode gas diffusion layers (4, 5), wherein the elastomeric seal (17) is made of elastomers that are selected from the group consisting of polyisobutylene, ethylene propylene diene monomer, silicone, polyolefin elastomer, and fluorocarbon rubber; and
- the bond between the one of the anode and cathode gas diffusion layers (4, 5) and the catalyst coated membrane (3) assembly comprises an adhesive layer (18) bridging the elastomeric seal (17) and the edge of the one of the anode and cathode gas diffusion layers (4, 5).

2. The unit cell assembly (20) of claim 1 wherein the anode and cathode gas diffusion layers (4, 5) are porous carbon sheets.

3. The unit cell assembly (20) of claim 1 or 2 wherein the flow field plate assembly (6) is carbonaceous.

4. The unit cell assembly (20) of one of the previous claims wherein the flow field plate assembly (6) comprises a fuel flow field plate (6a) comprising the fuel flow field and a coolant flow field on opposite sides and an oxidant flow field plate (6b) comprising the oxidant flow field and a coolant flow field on opposite sides, wherein the fuel and oxidant flow field plates are bonded together on their respective coolant flow field sides.

5. The unit cell assembly (20) of one of the previous claims wherein the flow field plate assembly (6) is bonded to the anode gas diffusion layer (4) on its fuel flow field side; the bond between the flow field plate assembly (6) and the anode gas diffusion layer (4) comprises an elastomeric seal (17) at the edge of the anode diffusion layer (4); and the bond between the anode gas diffusion layer (4) and the catalyst coated membrane (3) assembly comprises an adhesive layer (18) bridging the elastomeric seal (17) and the edge of the anode gas diffusion layer (4).

6. The unit cell assembly (20) of one of the previous claims wherein the elastomeric seal (17) is a liquid injection mold seal.

7. The unit cell assembly (20) of one of the previous claims wherein the elastomeric seal (17) comprises an elastomer having a viscosity greater than 100000 mPa·s.

8. The unit cell assembly (20) of one of the previous claims wherein the elastomeric seal (17) is an elastomer selected from the group consisting of polyisobutylene, ethylene propylene diene monomer, silicone, polyolefin elastomer and fluorocarbon rubber.

9. The unit cell assembly (20) of one of the previous claims wherein the adhesive layer (18) is essentially flush with the catalyst coated membrane (3) assembly.

10. The unit cell assembly (20) of one of the previous claims wherein the adhesive layer (18) comprises an adhesive selected from the group consisting of epoxies, urethanes, polyisobutylene and polyolefins.

11. The unit cell assembly (20) of one of the previous claims wherein the elastomeric seal (17) does not substantially penetrate the edge of the other of the anode and cathode gas diffusion layers (4, 5) nor the edge of the catalyst coated membrane (3) assembly.

12. A solid polymer electrolyte fuel cell stack comprising a series stack of a plurality of the unit cell assemblies (20) of one of the claims 1 to 11.

13. A method of manufacturing the unit cell assembly (20) of one of the claims 1 to 11 comprising:
- preparing the catalyst coated membrane (3) assembly;
- obtaining the anode and cathode gas diffusion layers (4, 5);
- obtaining components for the flow field plate assembly (6);
- applying an elastomeric seal (17) between the edge of the one of the anode and cathode gas diffusion layers (4, 5) and the respective one of the fuel and oxidant flow field sides of the flow field plate assembly (6)
- so as to bond the one of the anode and cathode gas diffusion layers (4, 5) to the flow field plate assembly (6);
- bonding the other of the anode and cathode gas diffusion layers (4, 5) to the catalyst coated membrane (3) assembly;
- applying the adhesive layer (18) between the one of the anode and cathode gas diffusion layers (4, 5) and the catalyst coated membrane (3) assembly such that it bridges the elastomeric seal (17) and the edge of the one of the anode and cathode gas diffusion layers (4, 5), wherein the elastomeric seal (17) is made of elastomers that are selected from the group consisting of polyisobutylene, ethylene propylene diene monomer, silicone, polyolefin elastomer, and fluorocarbon rubber; and
- bonding the catalyst coated membrane (3) assembly to the elastomeric seal (17) and to the edge of the one of the anode and cathode gas diffusion layers (4, 5) using the adhesive layer(18).

14. The method of claim 13 wherein the flow field plate assembly (6) comprises a fuel flow field plate (6a) comprising the fuel flow field and a coolant flow field on opposite sides and an oxidant flow field plate (6b) comprising the oxidant flow field and a coolant flow field on opposite sides, the method comprising:
- applying an elastomeric seal (17) between the edge of the one of the anode and cathode gas diffusion layers (4, 5) and the respective one of the fuel and oxidant flow field sides of the respective one of the fuel and oxidant flow field plates; and
- after the elastomeric seal (17) application step, bonding the fuel and oxidant flow field plates together on their respective coolant flow field sides.

15. The method of claim 13 or 14 wherein the flow field plate assembly (6) is bonded to the anode gas diffusion layer (4) on its fuel flow field side, the method comprising:
- applying an elastomeric seal (17) between the edge of the anode gas diffusion layer (4) and the fuel flow field side of the flow field plate assembly (6) so as to bond the anode gas diffusion layer (4) to the flow field plate assembly (6);
- bonding the cathode gas diffusion layer (5) to the catalyst coated membrane (3) assembly;
- applying the adhesive layer (18) between the anode gas diffusion layer (4) and the catalyst coated membrane (3) assembly such that it bridges the elastomeric seal (17) and the edge of the anode gas diffusion layer (4); and
- bonding the catalyst coated membrane (3) assembly to the elastomeric seal (17) and to the edge of the anode gas diffusion layer (4) using the adhesive layer (18).

## Patentansprüche

1. Eine Einheitszellenanordnung (20) für einen Festpolymer-Elektrolyt-Brennstoffzellenstapel, umfassend:
- eine katalysatorbeschichtete Membrananordnung (3) mit einer Anodenkatalysatorschicht, einer Kathodenkatalysatorschicht und einem Festpolymer-Membranelektrolyten, wobei die Anoden- und Kathodenkatalysatorschichten auf gegenüberliegenden Seiten des Festpolymer-Membranelektrolyten angebracht sind;
- eine Anodengasdiffusionsschicht (4), die auf der der Festpolymer-Membranelektrolyt gegenüberliegenden Seite der Anodenkatalysatorschicht mit der katalysatorbeschichteten Membrananordnung (3) verbunden ist;
- eine Kathodengasdiffusionsschicht (5), die auf der der Festpolymer-Membranelektrolyt gegenüberliegenden Seite der Kathodenkatalysatorschicht mit der katalysatorbeschichteten Membrananordnung (3) verbunden ist; und
- eine Strömungsfeldplattenanordnung (6) mit Brennstoff- und Oxidationsmittelströmungsfeldern auf gegenüberliegenden Seiten der Strömungsfeldplattenanordnung (6), wobei die Strömungsfeldplattenanordnung (6) jeweils auf einer ihrer Brennstoff- bzw. Oxidationsmittelströmungsfeldseiten mit einer der Anoden- bzw. Kathodengasdiffusionsschichten (4, 5) verbunden ist;
**gekennzeichnet dadurch, dass**:
- die Verbindung zwischen der Strömungsfeldplattenanordnung (6) und einer der Anoden- bzw. Kathodengasdiffusionsschichten (4, 5) eine elastomere Dichtung (17) am Rand einer der Anoden- bzw. Kathodengasdiffusionsschichten (4, 5) umfasst, wobei die elastomere Dichtung (17) aus einem Elastomer besteht, das ausgewählt ist aus der Gruppe bestehend aus Polyisobutylen, Ethylen-Propylen-Dien-Monomer, Silikon, Polyolefin-Elastomer und Fluorkautschuk; und
- die Verbindung zwischen einer der Anoden- bzw. Kathodengasdiffusionsschichten (4, 5) und der katalysatorbeschichteten Membrananordnung (3) eine Klebeschicht (18) umfasst, die die elastomere Dichtung (17) und den Rand einer der Anoden- bzw. Kathodengasdiffusionsschichten (4, 5) überbrückt.

2. Einheitszellenanordnung (20) nach Anspruch 1, wobei die Anoden- und Kathodengasdiffusionsschichten (4, 5) poröse Kohlenstofffolien sind.

3. Einheitszellenanordnung (20) nach Anspruch 1 oder 2, wobei die Strömungsfeldplattenanordnung (6) aus Kohlenstoff besteht.

4. Einheitszellenanordnung (20) nach einem der vorhergehenden Ansprüche, wobei die Strömungsfeldplattenanordnung (6) eine Brennstoffströmungsfeldplatte (6a) mit dem Brennstoffströmungsfeld und einem Kühlmittelströmungsfeld auf gegenüberliegenden Seiten sowie eine Oxidationsmittelströmungsfeldplatte (6b) mit dem Oxidationsmittelströmungsfeld und einem Kühlmittelströmungsfeld auf gegenüberliegenden Seiten umfasst, wobei die Brennstoff- und Oxidationsmittelströmungsfeldplatten auf ihren jeweiligen Kühlmittelströmungsfeldseiten miteinander verbunden sind.

5. Einheitszellenanordnung (20) nach einem der vorhergehenden Ansprüche, wobei die Strömungsfeldplattenanordnung (6) auf ihrer Brennstoffströmungsfeldseite mit der Anodengasdiffusionsschicht (4) verbunden ist; die Verbindung zwischen der Strömungsfeldplattenanordnung (6) und der Anodengasdiffusionsschicht (4) umfasst eine elastomere Dichtung (17) am Rand der Anodendiffusionsschicht (4). und die Verbindung zwischen der Anodengasdiffusionsschicht (4) und der katalysatorbeschichteten Membrananordnung (3) eine Klebeschicht (18) umfasst, die die elastomere Dichtung (17) und den Rand der Anodengasdiffusionsschicht (4) überbrückt.

6. Einheitszellenanordnung (20) nach einem der vorhergehenden Ansprüche, wobei die elastomere Dichtung (17) eine Flüssigspritzgussdichtung ist.

7. Einheitszellenanordnung (20) nach einem der vorhergehenden Ansprüche, wobei die elastomere Dichtung (17) ein Elastomer mit einer Viskosität von mehr als 100000 mPa·s umfasst.

8. Einheitszellenanordnung (20) nach einem der vorhergehenden Ansprüche, wobei die elastomere Dichtung (17) ein Elastomer ist, ausgewählt aus der Gruppe bestehend aus Polyisobutylen, Ethylen-Propylen-Dien-Monomer, Silikon, Polyolefin-Elastomer und Fluorkautschuk.

9. Einheitszellenanordnung (20) nach einem der vorhergehenden Ansprüche, wobei die Klebeschicht (18) im Wesentlichen bündig mit der katalysatorbeschichteten Membrananordnung (3) abschließt.

10. Einheitszellenanordnung (20) nach einem der vorhergehenden Ansprüche, wobei die Klebeschicht (18) einen Klebstoff umfasst, ausgewählt aus der Gruppe bestehend aus Epoxiden, Urethanen, Polyisobutylen und Polyolefinen.

11. Einheitszellenanordnung (20) nach einem der vorhergehenden Ansprüche, wobei die elastomere Dichtung (17) weder den Rand der jeweils anderen Anoden- und Kathodengasdiffusionsschicht (4, 5) noch den Rand der katalysatorbeschichteten Membrananordnung (3) wesentlich durchdringt.

12. Ein Festpolymer-Elektrolyt-Brennstoffzellenstapel, umfassend einen Reihenstapel mehrerer Einheitszellenanordnungen (20) nach einem der Ansprüche 1 bis 11.

13. Ein Verfahren zur Herstellung der Einheitszellenanordnung (20) nach einem der Ansprüche 1 bis 11, umfassend:
- Vorbereiten der katalysatorbeschichteten Membrananordnung (3);
- Erhalten der Anoden- und Kathodengasdiffusionsschichten (4, 5);
- Erhalten von Komponenten für die Strömungsfeldplattenanordnung (6);
- Aufbringen einer elastischen Dichtung (17) zwischen dem Rand einer der Anoden- und Kathodengasdiffusionsschichten (4, 5) und der jeweiligen Brennstoff- und Oxidationsmittelströmungsseite der Strömungsfeldplattenanordnung (6)
- um eine der Anoden- und Kathodengasdiffusionsschichten (4, 5) mit der Strömungsfeldplattenanordnung (6) zu verbinden;
- um die andere der Anoden- und Kathodengasdiffusionsschichten (4, 5) mit der katalysatorbeschichteten Membrananordnung (3) zu verbinden;
- Aufbringen der Klebeschicht (18) zwischen einer der Anoden- und Kathoden-Gasdiffusionsschichten (4, 5) und der katalysatorbeschichteten Membrananordnung (3) so, dass sie die elastomere Dichtung (17) und den Rand einer der Anoden- und Kathoden-Gasdiffusionsschichten (4, 5) überbrückt, wobei die elastomere Dichtung (17) aus einem Elastomer besteht, das aus Polyisobutylen, Ethylen-Propylen-Dien-Monomer, Silikon, Polyolefin-Elastomer und Fluorkautschuk ausgewählt ist; und
- Verbinden der katalysatorbeschichteten Membrananordnung (3) mit der elastomeren Dichtung (17) und dem Rand einer der Anoden- und Kathoden-Gasdiffusionsschichten (4, 5) mittels der Klebeschicht (18).

14. Verfahren nach Anspruch 13, wobei die Strömungsfeldplattenanordnung (6) eine Brennstoffströmungsfeldplatte (6a) mit dem Brennstoffströmungsfeld und einem Kühlmittelströmungsfeld auf gegenüberliegenden Seiten sowie eine Oxidationsmittelströmungsfeldplatte (6b) mit dem Oxidationsmittelströmungsfeld und einem Kühlmittelströmungsfeld auf gegenüberliegenden Seiten umfasst, wobei das Verfahren Folgendes umfasst:
- Aufbringen einer elastomeren Dichtung (17) zwischen dem Rand einer der Anoden- und Kathodengasdiffusionsschichten (4, 5) und der jeweiligen Brennstoff- bzw. Oxidationsmittelströmungsfeldseite der jeweiligen Brennstoff- bzw. Oxidationsmittelströmungsfeldplatte; und
- nach dem Aufbringen der elastomeren Dichtung (17) Verbinden der Brennstoff- und Oxidationsmittelströmungsfeldplatten an ihren jeweiligen Kühlmittelströmungsfeldseiten.

15. Verfahren nach Anspruch 13 oder 14, wobei die Strömungsfeldplattenanordnung (6) auf ihrer Brennstoffströmungsfeldseite mit der Anodengasdiffusionsschicht (4) verbunden ist, wobei das Verfahren Folgendes umfasst:
- Aufbringen einer elastomeren Dichtung (17) zwischen dem Rand der Anodengasdiffusionsschicht (4) und der Brennstoffströmungsfeldseite der Strömungsfeldplattenanordnung (6), um die Anodengasdiffusionsschicht (4) mit der Strömungsfeldplattenanordnung (6) zu verbinden;
- Verbinden der Kathodengasdiffusionsschicht (5) mit der katalysatorbeschichteten Membrananordnung (3);
- Aufbringen der Klebeschicht (18) zwischen der Anodengasdiffusionsschicht (4) und der katalysatorbeschichteten Membrananordnung (3), sodass sie die elastomere Dichtung (17) und den Rand der Anodengasdiffusionsschicht (4) überbrückt; und
- Verbinden der katalysatorbeschichteten Membrananordnung (3) mit der elastomeren Dichtung (17) und dem Rand der Anodengasdiffusionsschicht (4) mittels der Klebeschicht (18).

## Revendications

1. Un ensemble de cellule unitaire (20) pour une pile à combustible à électrolyte polymère solide, comprenant :
- un ensemble de membrane revêtue de catalyseur (3) comprenant une couche de catalyseur anodique, une couche de catalyseur cathodique et un électrolyte polymère solide, les couches de catalyseur anodique et cathodique étant liées aux faces opposées de l'électrolyte polymère solide ;
- une couche de diffusion de gaz anodique (4) liée à l'ensemble de membrane revêtue de catalyseur (3) du côté de la couche de catalyseur anodique opposé à l'électrolyte polymère solide ;
- une couche de diffusion de gaz cathodique (5) liée à l'ensemble de membrane revêtue de catalyseur (3) du côté de la couche de catalyseur cathodique opposé à l'électrolyte polymère solide ; et
- un ensemble de plaque de champ d'écoulement (6) comprenant des champs d'écoulement de combustible et d'oxydant sur ses faces opposées, l'ensemble de plaque de champ d'écoulement (6) étant lié à l'une des couches de diffusion de gaz anodique ou cathodique (4, 5) sur sa face respective de champ d'écoulement de combustible ou d'oxydant. **Caractérisé en ce que** :
- la liaison entre l'ensemble de la plaque de champ d'écoulement (6) et l'une des couches de diffusion de gaz anodique et cathodique (4, 5) comprend un joint élastomère (17) au bord de l'une des couches de diffusion de gaz anodique et cathodique (4, 5), ledit joint élastomère (17) étant constitué d'élastomères choisis parmi le polyisobutylène, le monomère d'éthylène-propylène-diène, le silicone, l'élastomère polyoléfine et le caoutchouc fluorocarboné ; et
- la liaison entre l'une des couches de diffusion de gaz anodique et cathodique (4, 5) et l'ensemble de la membrane revêtue de catalyseur (3) comprend une couche adhésive (18) reliant le joint élastomère (17) et le bord de l'une des couches de diffusion de gaz anodique et cathodique (4, 5).

2. Ensemble de cellule unitaire (20) selon la revendication 1, dans lequel les couches de diffusion de gaz anodique et cathodique (4, 5) sont des feuilles de carbone poreuses.

3. Ensemble de cellule unitaire (20) selon la revendication 1 ou 2, dans lequel l'ensemble de plaques de champ d'écoulement (6) est carboné.

4. Ensemble de cellule unitaire (20) selon l'une des revendications précédentes, dans lequel l'ensemble de plaques de champ d'écoulement (6) comprend une plaque de champ d'écoulement de combustible (6a) comportant un champ d'écoulement de combustible et un champ d'écoulement de fluide de refroidissement sur ses faces opposées, et une plaque de champ d'écoulement d'oxydant (6b) comportant un champ d'écoulement d'oxydant et un champ d'écoulement de fluide de refroidissement sur ses faces opposées, les plaques de champ d'écoulement de combustible et d'oxydant étant liées entre elles du côté de leur champ d'écoulement de fluide de refroidissement respectif.

5. Ensemble de cellule unitaire (20) selon l'une des revendications précédentes, dans lequel l'ensemble de plaques de champ d'écoulement (6) est lié à la couche de diffusion de gaz anodique (4) du côté de son champ d'écoulement de combustible, où la liaison entre l'ensemble de plaque de champ d'écoulement (6) et la couche de diffusion de gaz anodique (4) comprend un joint élastomère (17) au bord de la couche de diffusion anodique (4) ; et la liaison entre la couche de diffusion de gaz anodique (4) et l'ensemble membrane revêtue de catalyseur (3) comprend une couche adhésive (18) reliant le joint élastomère (17) au bord de la couche de diffusion de gaz anodique (4).

6. Ensemble de cellule unitaire (20) selon l'une des revendications précédentes, dans lequel le joint élastomère (17) est un joint moulé par injection liquide.

7. Ensemble de cellule unitaire (20) selon l'une des revendications précédentes, dans lequel le joint élastomère (17) est constitué d'un élastomère présentant une viscosité supérieure à 100 000 mPa·s.

8. Ensemble de cellule unitaire (20) selon l'une des revendications précédentes, dans lequel le joint élastomère (17) est un élastomère choisi parmi le polyisobutylène, le monomère d'éthylène-propylène-diène, le silicone, l'élastomère polyoléfine et le caoutchouc fluorocarboné.

9. Ensemble de cellule unitaire (20) selon l'une des revendications précédentes, dans lequel la couche adhésive (18) est sensiblement au même niveau que l'assemblage de membrane revêtue de catalyseur (3).

10. Ensemble de cellule unitaire (20) selon l'une des revendications précédentes, dans lequel la couche adhésive (18) comprend un adhésif choisi parmi les époxydes, les uréthanes, le polyisobutylène et les polyoléfines.

11. Ensemble de cellule unitaire (20) selon l'une des revendications précédentes, dans lequel le joint élastomère (17) ne pénètre pas sensiblement au bord de l'autre couche de diffusion de gaz anodique et cathodique (4, 5), ni au bord de l'assemblage de membrane revêtue de catalyseur (3).

12. Pile à combustible à électrolyte polymère solide comprenant un empilement en série de plusieurs ensemble de cellules unitaires (20) selon l'une des revendications 1 à 11.

13. Procédé de fabrication de l' ensemble de cellule unitaire (20) selon l'une des revendications 1 à 11, comprenant :
- la préparation de l'assemblage de membrane revêtue de catalyseur (3) ;
- l'obtention des couches de diffusion de gaz anodique et cathodique (4, 5) ;
- l'obtention des composants de l'assemblage de plaque de champ d'écoulement (6) ;
- appliquer un joint élastomère (17) entre le bord de l'une des couches de diffusion de gaz anodique et cathodique (4, 5) et le côté respectif du champ d'écoulement du combustible et de l'oxydant de l'ensemble de la plaque de champ d'écoulement (6) ;
- afin de lier l'une des couches de diffusion de gaz anodique et cathodique (4, 5) à l'ensemble de la plaque de champ d'écoulement (6) ;
- coller l'autre couche de diffusion de gaz anodique et cathodique (4, 5) à l'ensemble de la membrane revêtue de catalyseur (3) ;
- appliquer la couche adhésive (18) entre l'une des couches de diffusion de gaz anodique et cathodique (4, 5) et l'ensemble membrane revêtue de catalyseur (3), de manière à assurer la liaison entre le joint élastomère (17) et le bord de l'une des couches de diffusion de gaz anodique et cathodique (4, 5), où le joint élastomère (17) est constitué d'élastomères choisis parmi le polyisobutylène, le monomère d'éthylène-propylène-diène, le silicone, l'élastomère polyoléfine et le caoutchouc fluorocarboné ;
- coller l'ensemble membrane revêtue de catalyseur (3) au joint élastomère (17) et au bord de l'une des couches de diffusion de gaz anodique et cathodique (4, 5) à l'aide de la couche adhésive (18).

14. Procédé selon la revendication 13, dans lequel l'ensemble de plaques de champ d'écoulement (6) comprend une plaque de champ d'écoulement de combustible (6a) comportant un champ d'écoulement de combustible et un champ d'écoulement de fluide de refroidissement sur des faces opposées, et une plaque de champ d'écoulement d'oxydant (6b) comportant un champ d'écoulement d'oxydant et un champ d'écoulement de fluide de refroidissement sur des faces opposées, le procédé comprenant :
- l'application d'un joint élastomère (17) entre le bord de l'une des couches de diffusion de gaz de l'anode et de la cathode (4, 5) et le côté respectif des champs d'écoulement de combustible et d'oxydant de chacune des plaques de champ d'écoulement de combustible et d'oxydant ; et
- après l'application du joint élastomère (17), le collage des plaques de champ d'écoulement de combustible et d'oxydant l'une avec l'autre sur leurs côtés respectifs des champs d'écoulement de fluide de refroidissement.

15. Procédé selon la revendication 13 ou 14, dans lequel l'ensemble de plaque de champ d'écoulement (6) est collé à la couche de diffusion de gaz anodique (4) du côté du champ d'écoulement du combustible, le procédé comprenant :
- l'application d'un joint élastomère (17) entre le bord de la couche de diffusion de gaz anodique (4) et le côté du champ d'écoulement du combustible de l'ensemble de plaque de champ d'écoulement (6), de manière à coller la couche de diffusion de gaz anodique (4) à l'ensemble de plaque de champ d'écoulement (6) ;
- le collage de la couche de diffusion de gaz cathodique (5) à l'ensemble de membrane revêtue de catalyseur (3) ;
- l'application de la couche adhésive (18) entre la couche de diffusion de gaz anodique (4) et l'ensemble de membrane revêtue de catalyseur (3), de manière à faire le lien entre le joint élastomère (17) et le bord de la couche de diffusion de gaz anodique (4) ; et
- le collage de l'ensemble de membrane revêtue de catalyseur (3) au joint élastomère (17) et au bord de la couche de diffusion de gaz anodique (4) à l'aide de la couche adhésive (18).
